# EUROPÄISCHE PATENTSCHRIFT

(11) **EP 2 768 302 B1**
(45) Veröffentlichungstag und Bekanntmachung des Hinweises auf die Patenterteilung: **22.08.2018**
(21) Anmeldenummer: 12756485.4
(22) Anmeldetag: 11.09.2012
(51) Int. Cl.: A01M 7/00

(54) **LANDWIRTSCHAFTLICHES FELDSPRITZENSYSTEM**
AGRICULTURAL FIELD-SPRAYING SYSTEM
SYSTÈME DE PULVÉRISATION AGRICOLE

(30) Priorität: 20.10.2011 DE 102011054632; 14.05.2012 DE 102012104169
(43) Veröffentlichungstag der Anmeldung: 27.08.2014
(73) Patentinhaber: Amazonen-Werke H. Dreyer GmbH & Co. KG, 49205 Hasbergen (DE); BASF SE, 67056 Ludwigshafen am Rhein (DE)
(72) Erfinder: KIEFER, Stefan, 49074 Osnabrück (DE); HUBER, Robert, 67117 Limburgerhof (DE); WEGKAMP, Heinz-Gerd, 68642 Bürstadt (DE)
(86) Internationale Anmeldenummer: PCT/EP2012/067699
(87) Internationale Veröffentlichungsnummer: WO 2013/056897

(56) Entgegenhaltungen:
- EP-A1- 2 016 993
- FR-A- 1 553 595
- US-A- 5 665 910

## Beschreibung

Die Erfindung betrifft ein landwirtschaftliches Feldspritzensystem gemäß des Oberbegriffes des Patentanspruches 1.
Ein derartiges landwirtschaftliches Feldspritzensystem ist in der landwirtschaftlichen Praxis bekannt geworden. Bei derartigen landwirtschaftlichen Feldspritzensystemen werden die Wirkstoffmittel über Dosierpumpen der Trägerflüssigkeit, die sich in der Regel in einem Flüssigkeitstank befindet, zu dosiert. In der Leitung, über welche das Wirkstoffmittel zu dosiert wird, ist ein Durchflussmesser angeordnet. Mittels dieses Durchflussmessers, der über eine Datenleitung mit einem Bordrechner verbunden ist, wird die zudosierte Menge von Wirkstoffmitteln ermittelt. Insbesondere wenn relativ kleine Mengen Wirkstoffmittel pro Zeiteinheit zudosiert werden, sind die ermittelten Messwerte ungenau.
Der Erfindung liegt die Aufgabe zu Grunde, eine genauere Ermittlung der zu dosierten Menge von Wirkstoffmittel zu ermöglichen. Die Mittel sind als Wiegeeinrichtung ausgebildet, siehe z.B. US 5,665,910 A. Infolge der Maßnahme, dass die Mittel zur Ermittlung der ausgebrachten und/oder zu dosierten Menge von Wirkstoffmittel als Wiegeeinrichtung ausgebildet sind, lässt sich über entsprechend große Zeiträume und/oder Zeitintervalle die tatsächlich ausgebrachte und/oder zudosierte Menge von Wirkstoffmitteln sehr genau ermitteln. Die Wiegeeinrichtung kann über entsprechend große Zeitintervalle auch sehr kleine Mengen zudosierter und/oder ausgebrachter Wirkstoffmittel auswiegen.
In einfacher Weise lässt sich die tatsächlich zudosierte und/oder ausgebrachte Wirkstoffmittelmenge dadurch berechnen, dass in dem Speicher des Bordrechners ein Programm abgespeichert ist, mittels welchem aus den von der Wiegeeinrichtung übermittelten Messdaten die zudosierte und/oder ausgebrachte Wirkstoffmittelmenge ermittelbar ist.

Eine sehr genaue Ermittlung der tatsächlich zudosierten und/oder ausgebrachten Wirkstoffmittelmenge lässt sich dadurch erfindungsgemäß berechnen, dass Mittel vorhanden sind, mittels welchen das sich in den an dem Wirkstoffmittelbehälter angeschlossenen Zuführleitungen, die zu der Feldspritze führen, befindliche Menge zu dosierte Wirkstoffmittel, bei der Ermittlung der Messwerte durch die Wiegeeinrichtung unberücksichtigt bleibt und/oder herausrechenbar ist.
Weitere Einzelheiten der Erfindung sind der Beispielsbeschreibung zu entnehmen. Die Zeichnungen zeigen
- Fig.1: die Zudosierungsanordnung des Wirkstoffmittels in die Trägerflüssigkeit mit Wiegeeinrichtung in Prinzipdarstellung,
- Fig.2: ein Flussdiagramm, in welchem die Zudosierung und die Ermittlung der zudosierten Wirkstoffmittelmenge in prinzipieller Weise dargestellt ist und
- Fig.3: eine weitere Zudosierungsanordnung des Wirkstoffmittels in die Trägerflüssigkeit mit Wiegeeinrichtung in Prinzipdarstellung.
Die Zudosierungsanordnung 1 ist einem bekannten und nicht näher dargestellten landwirtschaftlichen Feldspritzensystem, welches eine Feldspritze mit Fahrwerk, Vorratsbehälter Flüssigkeitspumpe, Dosiereinrichtungen, Ausbringleitung und Verteilergestänge mit Ausbringdüsen aufweist, zugeordnet.
Die Zudosierungsanordnung 1 weist ein Lagergestell 2, welches der nicht dargestellten Feldspritze zugeordnet ist, auf. Auf dem Lagergestell 2 ist eine Wiegeeinrichtung 3 angeordnet. Auf der Wiegeeinrichtung 3 befindet sich der Behälter 4 mit einem landwirtschaftlichen Wirkstoffmittel. An dem Einfüll- und Entnahmestutzen 5 ist der Dreiwegehahn 6 angeordnet. An dem Dreiwegehahn 6 ist eine in den Behälter 4 nach unten hineinragende Entnahmeleitung 7 angeordnet. Weiterhin ist an dem Dreiwegehahn eine Zuführleitung 8 angeschlossen. Über diese Zuführleitung 8, die an einen Flüssigkeitstank, der vorzugsweise Wasser enthält, angeschlossen ist, ist dem System Reinigungs- und/oder Trägerflüssigkeit zuzuführen. Weiterhin ist an dem Dreiwegehahn 6 die Dosierleitung 9 mit der motorisch angetriebenen Dosierpumpe 10 angeschlossen. Die Dosierleitung 9 mündet in das Flüssigkeitssystem der Feldspritze ein. Über die Dosierleitung 9 und die Dosierpumpe 10 wird das sich in dem Behälter 4 befindliche Wirkstoffmittel in die Trägerflüssigkeit der Feldspritze in dosierter Weise eingespeist. Eine derartige Dosierung ist auch für ein Direkteinspeisesystem geeignet. Weiterhin ist dem Feldspritzensystemen und der zugeordneten Zudosierungsanordnung 1 ein Bordrechner 11 zugeordnet. Der Bordrechner 11 ist über Datenleitungen 12 mit der Wiegeeinrichtung 3 und dem Dreiwegehahn 6 verbunden. Mittels der Wiegeeinrichtung 3 ist es in Verbindung mit dem Bordrechner 11 möglich, die ausgebrachte und/oder zu dosierte Menge des Wirkstoffmittels zu ermitteln. Hierzu ist in dem Speicher des Bordrechners 11 ein Programm abgespeichert, mittels welchem aus den von der Wiegeeinrichtung 3 ermittelten Messdaten die zudosierte und/oder ausgebrachte Wirkstoffmittelmenge ermittelbar ist.

Hierbei ist das System ist so aufgebaut, dass Mittel vorhanden sind, mittels welchen das sich in den an dem Wirkstoffmittelbehälter 4 angeschlossenen Zuführleitungen 8 und 9, die zu der Feldspritze führen, befindliche Menge zu dosierter Wirkstoffmittel, bei der Ermittlung der Messwerte durch die Wiegeeinrichtung 3 unberücksichtigt bleibt und/oder herausrechenbar ist. Dieses ist von entscheidender Bedeutung, damit keine Fehlmessungen erfolgen.

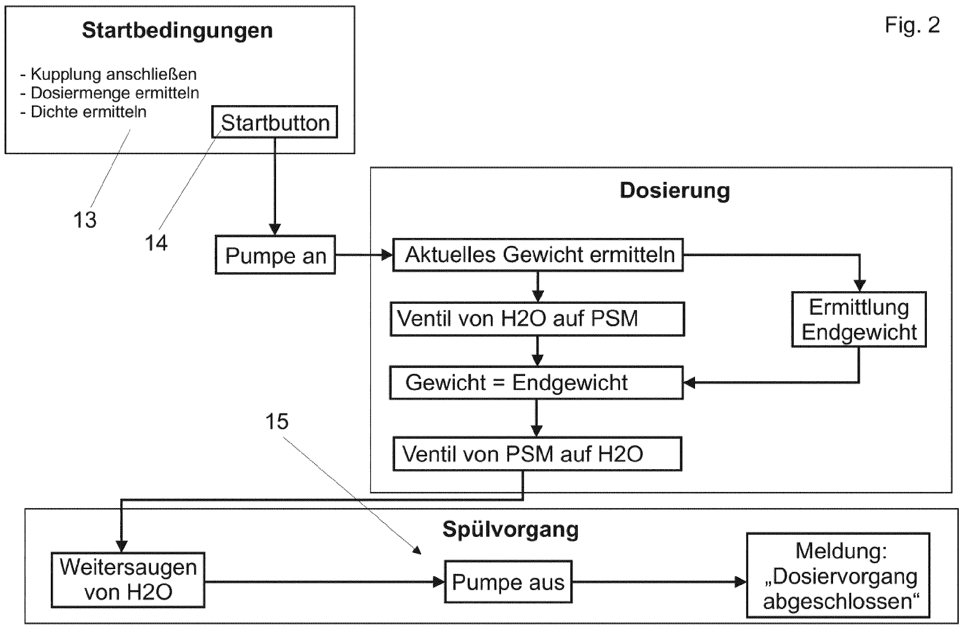

Entsprechend des in Fig.2 dargestellten Flussdiagrammes wird die Ermittlung der Menge des zudosierten Wirkstoffmittels erläutert:
Zunächst wird der Behälter 4 mit dem Wirkstoffmittel auf die Wiegeeinrichtung 3 gestellt. Dann wird die Kupplung mit dem Dreiwegehahn 6 an dem Behälter 4 angeschlossen. Weiterhin wird die erforderliche Menge des zu dosierten Wirkstoffmittels ermittelt, welche der Trägerflüssigkeit zu dosiert werden soll. Weiterhin muss die Dichte des Wirkstoffmittels ermittelt werden, damit die Wiegeeinrichtung in Verbindung mit dem Bordrechner 11 die richtige Wirkstoffmittelmenge berechnen kann. Dies kann alternativ auch über ein elektronisches Etikettensystem, beispielsweise RFID-System erfolgen. Wenn diese Startbedingungen 13 erfüllt sind, kann an der Vorrichtung der Startbutton 14 von dem Bediener gedrückt werden.

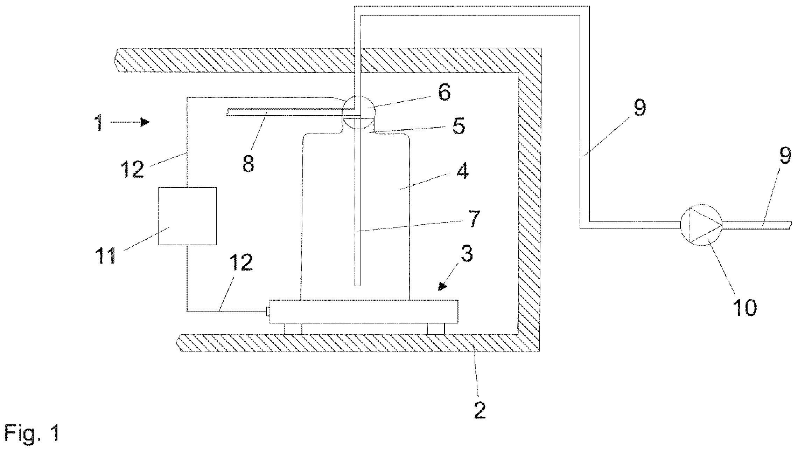

Hierdurch wird dann die Pumpe 10 eingeschaltet. Und die Dosierung kann entsprechend, wie in dem Flussdiagramm gemäß Fig.2 dargestellt ist, erfolgen. Es wird zunächst das aktuelle Gewicht, welches sich in dem Behälter 4 befindet ermittelt. Anschließend wird das als Dreiwegehahn 6 ausgebildete Ventil von der in Fig.1 dargestellten Position durch die Ansteuerung von dem Bordrechner 11 umgestellt, so dass nicht mehr Wasser, sondern Pflanzenschutzmittel aus dem Behälter 4 angesaugt wird. Während dieses Vorganges wird das jeweilige Gewicht beziehungsweise das entnommene Gewicht über die Wiegeeinrichtung 3 und dem Bordrechner 11 ermittelt. Wenn die erforderliche Menge Wirkstoffmittel der Trägerflüssigkeit zu dosiert ist, das heißt wenn das errechnete Gewicht erreicht ist, wird das Ventil 6 über den Bordrechner 11 von Ansaugen von Pflanzenschutzmittel auf Wasser umgeschaltet.

Hierdurch wird der Spülvorgang 15 eingeleitet. Wenn der Spülvorgang 15 durchgeführt ist, gibt der Bordrechner 11 das Signal "Pumpe aus" an die Schaltvorrichtung der Pumpe 10 und es erfolgte die Meldung: "Dosiervorgang abgeschlossen".

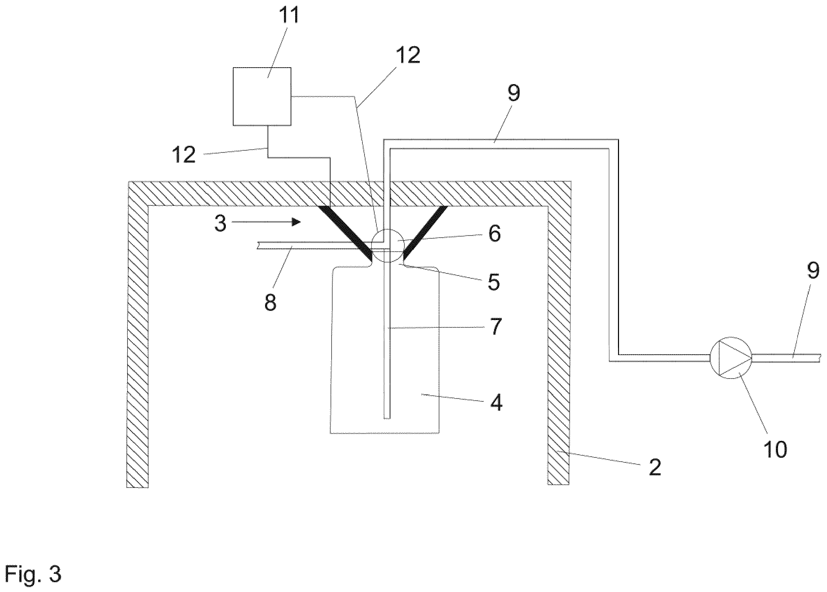

Das Ausführungsbeispiel gemäß Fig.3 unterscheidet sich von dem Ausführungsbeispiel gemäß Fig.1 dadurch, dass die Wiegeeinrichtung 3 nicht unterhalb des Behälters 4, in dem sich das Wirkstoffmittelmittel findet, sondern oberhalb dessen angeordnet ist, und der Behälter 4 an der Wiegeeinrichtung 3 aufgehängt ist. Im Übrigen erfolgt die Dosierung und Ermittlung der zudosierten und/oder ausgebrachten Menge des Wirkstoffmittels wie zu den Fig.1 und 2 beschrieben ist.

Es sei noch auf folgendes hingewiesen:
Auf der Wiegeeinrichtung können auch mehr als ein Behälter angeordnet werden, so dass ein Umschalten auf einen anderen Behälter in einfacher Weise erfolgen kann, beispielsweise wenn ein Behälter leer ist.

Auch kann der Entnahmeanschluss im unteren Bereich des Behälters sich befinden. Auch ist eine Überkopfentnahme des Wirkstoffmittels möglich.

## Patentansprüche

1. Landwirtschaftliches Feldspritzensystem mit einem Bordrechner und Mitteln zur Ermittlung der ausgebrachten und/oder zu dosierten Menge von Wirkstoffmitteln, wobei die Mittel als Wiegeeinrichtung (3) ausgebildet sind; **dadurch gekennzeichnet, dass** Mittel vorhanden sind, mittels welchen das sich in den an dem Wirkstoffmittelbehälter (4) angeschlossenen Zuführleitungen (8,9), die zu der Feldspritze führen, befindliche Menge zu dosierte Wirkstoffmittel, bei der Ermittlung der Messwerte durch die Wiegeeinrichtung (3) unberücksichtigt bleibt und/oder herausrechenbar ist.

2. Feldspritzensystem nach Anspruch 1, **dadurch gekennzeichnet, dass** in dem Speicher des Bordrechners (11) ein Programm abgespeichert ist, mittels welchem aus den von der Wiegeeinrichtung (3) übermittelten Messdaten die zu dosierte und/oder ausgebrachte Wirkstoffmittelmenge ermittelbar ist.

## Claims

1. Agricultural field-spraying system comprising an on-board computer and means for determining the amount of active substances dispensed and/or to be metered, the means taking the form of a weighing device (3), **characterized in that** there are means by which the amount of active substance to be metered that is in the feed lines (8, 9) connected to the active substance container (4) and leading to the field sprayer is ignored and/or can be eliminated in the calculation by the weighing device (3) when determining the measured values.

2. Field-spraying system according to Claim 1, **characterized in that** a program by means of which the amount of active substance to be metered and/or dispensed can be determined from the measurement data transmitted from the weighing device (3) is stored in the memory of the on-board computer (11).

## Revendications

1. Système de pulvérisation agricole avec un ordinateur de bord et des moyens pour la détermination de la quantité projetée et/ou à doser d'agents actifs, dans lequel les moyens sont réalisés sous la forme d'un dispositif de pesage (3), **caractérisé en ce qu'**il se trouve des moyens, au moyen desquels la quantité d'agent actif à doser se trouvant dans les conduites d'alimentation (8, 9) raccordées au réservoir d'agent actif (4), qui conduisent au pulvérisateur, n'est pas prise en compte et/ou peut être écartée lors de la détermination des valeurs de mesure par le dispositif de pesage (3).

2. Système de pulvérisation selon la revendication 1, **caractérisé en ce qu'**un programme est stocké dans la mémoire de l'ordinateur de bord (11), au moyen duquel la quantité d'agent actif à doser et/ou projetée peut être déterminée à partir des données de mesure déterminées par le dispositif de pesage (3).
